# EUROPÄISCHE PATENTSCHRIFT

(11) **EP 2 179 894 B1**
(45) Veröffentlichungstag und Bekanntmachung des Hinweises auf die Patenterteilung: **11.07.2012**
(21) Anmeldenummer: 09172823.8
(22) Anmeldetag: 13.10.2009
(51) Int. Cl.: B60R 11/02, B60R 11/04, B60R 1/04, B60S 1/08

(54) **Träger oder Halter für einen Regensensor, Lichtsensor, eine Kamera, einen Spiegel oder dergleichen an einer Windschutzscheibe**
Holder or carrier for a rain sensor, light sensor, a camera, a mirror or similar on a windscreen
Support ou appui pour un capteur de pluie, capteur de lumière, une caméra, un miroir ou analogue sur un pare-brise

(30) Priorität: 21.10.2008 DE 102008052511
(43) Veröffentlichungstag der Anmeldung: 28.04.2010
(73) Patentinhaber: Saint-Gobain Glass France, 92400 Courbevoie (FR)
(72) Erfinder: Timmermann, Alwin, 50933 Köln (DE)
(74) Vertreter: Lendvai, Tomas

(56) Entgegenhaltungen:
- EP-A1- 1 491 404
- EP-A2- 1 431 146
- DE-A1- 10 211 444
- DE-A1- 19 804 165
- DE-A1-102005 014 671
- DE-A1-102006 039 065

## Beschreibung

Die Erfindung betrifft einen Träger oder Halter für einen Regensensor, Lichtsensor, eine Kamera, einen Spiegel oder dergleichen, der mittels eines Klebers an der Fläche einer Scheibe, vorzugsweise an einer Windschutzscheibe eines Fahrzeugs festgelegt ist.

Aus dem Stand der Technik sind Träger oder Halter bekannt, die einen Regensensor, einen Lichtsensor, eine Kamera oder einen Spiegel an einer Windschutzscheibe eines Fahrzeugs festlegen. Der Träger oder Halter wird dabei in üblicher Weise mit einem Kleber an der Scheibenfläche befestigt. Dabei verwendet man Träger oder Halter aus Metall, weil diese weitestgehend geringe Wärmeausdehnungen aufweisen. Denn bei dem verwendeten Klebesystem, das hier zum Einsatz gebracht wird, handelt es sich um einen so genannten Hartkleber, der nach dem Aushärten keine Bewegung zulässt und somit an der Scheibenfläche verstarrt.

Der aufgetragene Klebefilm, der nach dem Aushärten hart ist, nimmt kaum Bewegungen durch Wärmespannungen auf. Dies führt zu dem Problem, dass es in Folge von Dehnungen zu Glasbruch kommen kann oder zum Ablöseversagen der Klebung. Daher ist es erforderlich, hier für den Träger oder Halter einen Werkstoff zu wählen, der möglichst wenig oder keine Wärmeausdehnungen aufweist, um dem geschilderten Problem gerecht zu werden, was wiederum den Nachteil mit sich bringt, dass vornehmlich kostenaufwendige Materialien zu verwenden sind.

EP 1 491 404 offenbart einen Träger oder Halter für einen Regensensor, Lichtsensor, eine Kamera, einen Spiegel oder dergleichen, der mittels eines Klebers an der Fläche einer Scheibe, vorzugsweise an einer Windschutzscheibe eines Fahrzeuges festgelegt ist, wobei der Träger oder Halter aus einem einstückigen Kunststoffformteil mit zwei oder mehr Haftflächen besteht, an denen mittels eines Hartklebers der Träger oder Halter bereichsweise an der Scheibenfläche festgelegt ist, und wobei der aus einstückigen Körper geformte Träger oder Halter in seiner Formgebung zwischen den gegenüberliegenden Haftflächen Stauch- oder Dehnzonen aufweist.

Der Erfindung stellt sich somit das Problem einen Träger oder Halter für einen Regensensor, Lichtsensor, eine Kamera, einen Spiegel oder dergleichen bereit zu stellen, der die geschilderten Nachteile überwindet, wobei er aus einem Nicht-Metallmaterial gefertigt ist, welches leichter und kostengünstiger ist, und wobei insbesondere der Träger oder Halter dabei mit einem Hartklebesystem zusammenwirken soll.

Erfindungsgemäß wird dieses Problem durch den Hauptanspruch gelöst; vorteilhafte Weiterbildungen der Erfindung ergeben sich aus den Unteransprüchen.

Bei der erfindungsgemäßen Lösung kann der Träger oder Halter aus Kunststoff ausgeführt sein, also aus Materialien, die von Haus aus eine größere Wärmedehnung aufweisen. Die mit dem Hartkleber sich ergebenden Probleme werden dadurch gelöst, dass der Hartkleber den Dehnungen nicht mehr unterliegt, da er nur bereichsweise eine Verbindung zum Träger oder Halter herstellt. Ein Glasbruch oder ein Ablöseversagen der Klebung wird dadurch unterbunden. Denn gemäß der erfindungsgemäßen Lösung wird die Kraft dort eingeleitet, wo die Fixpunkte sind, das heißt, in diesem Ausführungsbeispiel wären das die begrenzt ausgebildeten Haftflächen. Wird der Träger oder Halter an der Scheibe festgelegt, kann er beispielsweise einen Sensor in sich aufnehmen. Durch diese Konfiguration ist es möglich, dort wo der Sensor befestigt wird, dass man diesen Kunststoff in sehr steifer Ausführung lokal auftragen kann, wobei das Träger- oder Halteteil derart ausgeführt ist, dass es eine Dehnung oder Stauchung in Folge seiner Formgebung bzw. Formgestaltung elastisch aufnehmen kann, ohne dass durch die Dehnung bzw. Stauchung auf die Klebefläche allzu große Kräfte übertragen werden. Der Kleber, der hierbei zum Tragen kommt, härtet durch Hitze und auch unter Hitze und Druck aus. Diese Kleber sind somit geeignet, dass sie mit durch den Autoklavprozess gehen können, was insbesondere im Automotivbereich eine Komponentenbauweise zulässt.

Dabei besteht der Träger oder Halter aus einem einstückigen Kunststoffformteil mit Haftflächen, an denen mittels eines Hartklebers der Träger oder Halter bereichsweise an der Scheibenfläche festgelegt ist, und wobei der aus einem einstückigen Körper geformte Träger oder Halter in seiner Formgebung zwischen den Haftflächen Stauch- bzw. Dehnzonen aufweist. Diese Ausbildung gewährleistet insbesondere, dass ein Kunststoffformkörper, der mit Bereichen fest an der Scheibe fixiert ist, Dehnungen oder Stauchungen mit vollzieht, ohne dass es hier zu Schäden einerseits an der Scheibe bzw. an dem Träger oder Halter kommt. Dabei weist der Körper eine geschlossene umlaufende Wand auf, an dessen Randbereich, vorzugsweise gegenüberliegend, die Haftflächen zur Aufnahme des Hartklebers angeformt sind. Somit ist insbesondere die Dehnungs- bzw. Stauchrichtung vorgegeben, so dass entsprechend dieser Längenänderungen der Körper gedehnt bzw. gestaucht werden kann.

In vorteilhafter Weiterbildung sind in der Formgebung der Wand Stauch- und Dehnzonen vorgesehen. Die Stauch- bzw. Dehnzonen sind vorzugsweise ebenfalls gegenüberliegend quer zu den Haftflächen in der Wand angeordnet. Dabei sind die Stauch- bzw. Dehnzonen als aus der Wand heraus geformte bzw. eingeformte Bereiche ausgebildet. Diese liegen somit quer zu den Haftflächen, so dass hier quasi ein in sich bewegbarer Körper fest an einer Scheibe angeordnet werden kann.

In Weiterbildung der Erfindung sind insbesondere die heraus geformten bzw. eingeformten Bereiche wellenförmig ausgebildet. Dabei umfasst die Wellenform eine S-Form.

Nach einer zweckmäßigen Ausgestaltung der Erfindung weist die Wand des Körpers zwei konkav geformte Bereiche auf, die jeweils endseitig mit den wellenförmigen Bereichen verbunden sind. Die wellenförmigen Bereiche sind hierbei zwischen parallel geformten Stegen angeordnet. Somit ergeben sich zwischen den beiden konkav geformten Bereichen Stauch- bzw. Dehnzonen, die jedoch den Gesamtkörper in der Form erhalten. In zweckmäßiger Weise ist jeweils außenseitig an dem konkav geformten Bereich jeweils eine Haftfläche angeformt, wobei an der Wand zur Haftfläche weisend Rasten zur Festlegung einer Abdeckung angeformt sind. Ist der Träger oder der Halter an der Scheibe festgelegt, so kann er quasi als Gehäuse fungieren, wobei dann der Sensor, der beispielsweise hier die Form einer Scheibe oder Dose einnehmen kann, in das Gehäuse eingelegt werden kann. Auf den Träger wird dann eine Abdeckung in Form eines Deckels oder einer Kappe angeklipst zur Schließung des Gehäuses, in dem der Sensor unter einem Spiel aufgenommen wird.

Ein Ausführungsbeispiel der Erfindung ist in den Zeichnungen rein schematisch dargestellt und wird nachfolgend näher beschrieben. Es zeigt:
- Figur 1: eine Draufsicht in der Perspektive auf einen Träger oder einen Halter gemäß der Erfindung;
- Figur 2: eine Unteransicht auf den Träger bzw. den Halter gemäß der Figur 1.

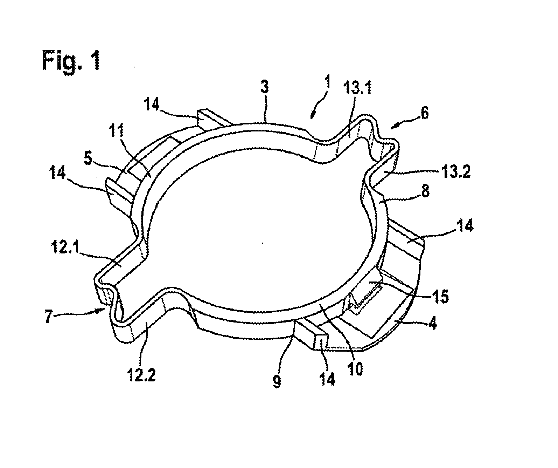

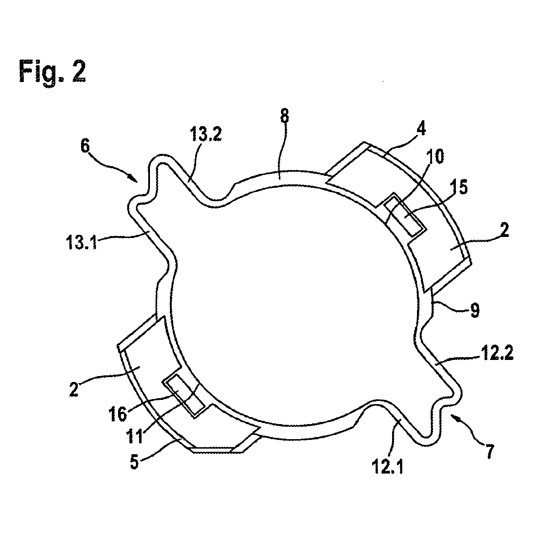

Die Figur 1 zeigt einen Träger oder Halter 1 für einen nicht näher dargestellten Regensensor, Lichtsensor oder eine Kamera bzw. einen Spiegel. Der Träger oder Halter 1 wird dabei mittels eines Haftklebers 2, insbesondere dargestellt in der Unteransicht der Figur 2, an einer Fläche einer Scheibe und hier vorzugsweise an einer Windschutzscheibe eines Fahrzeugs festgelegt, welche ebenfalls nicht näher dargestellt ist. Dabei besteht der Träger oder Halter 1 aus einem einstückigen Kunststoffformteil 3 mit Haftflächen 4 und 5, an denen mittels eines Haftklebers 2 der Träger oder Halter 1 bereichsweise an der Scheibenfläche festgelegt ist.

Wie aus den beiden Figuren deutlich zu erkennen ist, ist der Träger oder Halter 1 aus einem einstückigen Körper geformt, wobei gemäß seiner sich darstellenden Formgebung zwischen den Haftflächen 4 und 5 so genannte Stauch- bzw. Dehnzonen 6 und 7 angeordnet sind. Dabei weist der Körper eine geschlossene umlaufende Wand 8 auf, an dessen Randbereich 9 vorzugsweise gegenüberliegend die Haftflächen 4 und 5 zur Aufnahme des Haftklebers 2 angeformt sind. Wie sich der Haftkleber 2 an den Haftflächen 4 und 5 einbindet, ist insbesondere in der Figur 2 in der Unteransicht dargestellt, wobei hier der Haftkleber 2 flächig unterhalb der Haftflächen 4 und 5 sowie teilweise unterhalb des Randbereichs 9 aufgetragen ist.

Wie insbesondere aus beiden Figuren deutlich wird, sind in der Formgebung der Wand 8 die Stauch- bzw. Dehnzonen 6 und 7 vorgesehen. Dabei sind die Stauch- und Dehnzonen 6 und 7 ebenfalls vorzugsweise gegenüberliegend in der Wand 8 angeordnet. Es versteht sich nun von selbst, wenn die Hauptstreck- oder Stauchrichtung in der Achse der Haftflächen 4 und 5 liegt, dass dann entsprechend im Bereich der Dehn- bzw. Stauchzone 6, 7 die lokalen Verformungen am Körper aufgenommen werden.

Nach einer zweckmäßigen Ausgestaltung der Erfindung sind die Stauch- bzw. Dehnzonen 6, 7 als aus der Wand 8 heraus geformte bzw. eingeformte Bereiche ausgebildet. Die heraus geformten bzw. eingeformten Bereiche sind hierbei, wie dargestellt, wellenförmig ausgebildet. Andere Formgebungen sind dabei durchaus denkbar, wobei die hier dargestellte Formgebung eine S-Form einnimmt.

Wie aus den beiden Figuren zu erkennen ist, weist die Wand 8 des Körpers zwei konkav geformte Bereiche 10 und 11 auf, die jeweils endseitig mit den wellenförmigen Bereichen verbunden sind. Dabei sind die wellenförmigen Bereiche zwischen parallel geformten Stegen 12.1 und 12.2 bzw. gegenüberliegend zwischen den Stegen 13.1 und 13.2 angeordnet. Somit greifen quasi die Stege 12.1 und 12.2 bzw. 13.1 und 13.2 die S-förmige Wellenform auf, wobei die Stege 12.2, 12.2 bzw. 13.1, 13.2 blattfederartige Wirkungen haben, die auslaufend in der Wellenform die Spannungen übertragen.

Wie bereits schon oben erwähnt, ist außenseitig an den konkav geformten Bereichen 10 und 11 jeweils eine Haftfläche 4 und 5 angeformt. Diese Haftflächen 4 und 5 können zur stabilen Anformung noch mit Querwänden 14 versehen sein, so dass die Haftflächen 4 und 5 die hinreichenden Andruckkraft erfährt, wenn der Träger oder Halter 1 an die Scheibe gedrückt wird.

Nach einer vorteilhaften Weiterbildung sind an der Wand 8 zur Haftfläche 4 und 5 weisend, jeweils Rasten 15 und 16 zur Festlegung einer ebenfalls nicht näher dargestellten Abdeckung angeformt. Es versteht sich nun von selbst, wenn die Abdeckung hier beispielsweise eine Scheibenform aufweist, dass somit ein Gehäuse von der Innenseite her an die Windschutzscheibe geheftet werden kann. In dem Gehäuse kann dann ein dosenförmiger Sensor oder auch ein dosenförmiger Lichtsensor unter einem Spiel eingelegt werden, so dass dieser nicht durch die Dehn- bzw. Stauchbewegungen in Mitleidenschaft gezogen wird. Dabei kann beispielsweise der Träger 1 mit dem Hartkleber 2 bereits bei der Scheibenherstellung mit berücksichtigt werden, so dass hier eine Art Komponentenbauweise gegeben ist.

## Patentansprüche

1. Träger oder Halter (1) für einen Regensensor, Lichtsensor, eine Kamera, einen Spiegel oder dergleichen, der mittels eines Klebers (2) an der Fläche einer Scheibe vorzugsweise an einer Windschutzscheibe eines Fahrzeugs festgelegt ist, der Träger oder Halter (1) aus einem einstückigen Kunststoffformteil (3) mit zwei oder mehreren Haftflächen (4) und (5) besteht, an denen mittels eines Hartklebers (2) der Träger oder Halter (1) bereichsweise an der Scheibenfläche festgelegt ist, und wobei der aus einem einstückigen Körper geformte Träger oder Halter (1) in seiner Formgebung zwischen den gegenüberliegenden Haftflächen (4) und (5) Stauch- oder Dehnzonen (6) und (7) aufweist, **dadurch gekennzeichnet, dass** der Körper eine geschlossene umlaufende Wand (8) aufweist, an dessen Randbereich (9), vorzugsweise gegenüberliegend, die Haftflächen (4) und (5) zur Aufnahme des Hartklebers (2) angeformt sind.

2. Träger nach Anspruch 1, **dadurch gekennzeichnet, dass** in der Formgebung der Wand (8) die Stauch- oder Dehnzonen (6) und (7) vorgesehen sind.

3. Träger nach Anspruch 1 oder 2, **dadurch gekennzeichnet, dass** die Stauch- oder Dehnzonen (6) und (7) vorzugsweise ebenfalls gegenüberliegend in der Wand (8) angeordnet sind.

4. Träger nach Anspruch 1 bis 3, **dadurch gekennzeichnet, dass** die Stauch- oder Dehnzonen (6) und (7) als aus der Wand (8) heraus geformte oder eingeformte Bereiche ausgebildet sind.

5. Träger nach Anspruch 4, **dadurch gekennzeichnet, dass** die heraus geformten oder eingeformten Bereiche wellenförmig ausgebildet sind.

6. Träger nach Anspruch 5, **dadurch gekennzeichnet, dass** die Wellenform S-förmig ausgebildet ist.

7. Träger nach Anspruch 5 oder 6, **dadurch gekennzeichnet, dass** die Wand (8) des Körpers zwei konkav geformte Bereiche (10) und (11) aufweist, die jeweils endseitig mit den wellenförmigen Bereichen verbunden sind.

8. Träger nach Anspruch 5 bis 7, **dadurch gekennzeichnet, dass** die wellenförmigen Bereiche zwischen parallel geformten Stegen (12.1, 12.2) oder (13.1, 13.2) angeordnet sind.

9. Träger nach Anspruch 7 oder 8, **dadurch gekennzeichnet, dass** außenseitig an den konkav geformten Bereichen (10) und (11) jeweils eine Haftfläche (4) oder (5) angeformt ist.

10. Träger nach Anspruch 1 bis 9, **dadurch gekennzeichnet, dass** an der Wand (8) zur Haftfläche (4) oder (5) weisend Rasten (15) und (16) zur Festelegung einer Abdeckung angeformt sind.

## Claims

1. Carrier or holder (1) for a rain sensor, light sensor, a camera, a mirror, or the like, which is affixed by means of adhesive (2) on the surface of a window pane, preferably on a windshield of a motor vehicle; the carrier or holder (1) consists of a one-piece molded plastic part (3) with two or more adhesion surfaces (4) and (5), on which, by means of a contact cement (2), the carrier or holder (1) is affixed by regions on the window pane surface, and wherein the carrier or holder (1) formed from a one-piece body has, in its shaping between the opposing adhesion surfaces (4) and (5), compression or expansion zones (6) and (7), **characterized in that** the body has a closed circumferential wall (8) on whose edge region (9), preferably opposite each other, the adhesion surfaces (4) and (5) are formed to accommodate the contact cement (2).

2. Carrier according to claim 1, **characterized in that** in the shaping of the wall (8), the compression or expansion zones (6) and (7) are provided.

3. Carrier according to claim 1 or 2, **characterized in that** the compression or expansion zones (6) and (7) are likewise preferably arranged opposite each other in the wall (8).

4. Carrier according to claim 1 through 3, **characterized in that** the compression or expansion zones (6) and (7) are configured as regions molded out from or into the wall (8).

5. Carrier according to claim 4, **characterized in that** the regions molded out or in are wave shaped.

6. Carrier according to claim 5, **characterized in that** the wave shape is S-shaped.

7. Carrier according to claim 5 or 6, **characterized in that** the wall (8) of the body has two concavely shaped regions (10) and (11), which are, in each case, connected to the wave shaped regions at their end.

8. Carrier according to claim 5 through 7, **characterized in that** the wave-shaped regions are arranged between parallel formed webs (12.1, 12.2) or (13.1, 13.2).

9. Carrier according to claim 7 or 8, **characterized in that** externally on the concavely shaped regions (10) and (11), an adhesion surface (4) or (5) is formed in each case.

10. Carrier according to claim 1 through 9, **characterized in that** brackets (15) and (16) to affix a cover are formed on the wall facing the adhesion surface (4) or (5).

## Revendications

1. Support ou dispositif de maintien (1) pour un capteur d'intempéries, un capteur lumineux, un appareil de prise de vues, un rétroviseur ou similaires, qui est fixé à l'aide d'une colle (2) à la surface d'une dalle, de préférence à une glace de pare-brise d'un véhicule, ledit support ou dispositif de maintien (1) étant fait d'une pièce moulée en matière plastique (3), fabriquée d'une seule pièce, avec deux surfaces d'adhérence (4) et (5) ou plus grâce auxquelles le support ou dispositif de maintien (1) est fixé par endroits à l'aide d'une colle forte (2) à la surface de la dalle et le support ou dispositif de maintien (1) constitué d'un corps fabriqué d'une pièce possédant dans sa mise en forme entre les surfaces d'adhérence (4) et (5) opposées des zones de compression ou d'extension (6) et (7), **caractérisé par le fait que** le corps possède une paroi circonférentielle continue (8) sur la partie marginale (9) de laquelle sont formées de préférence de façon opposée les surfaces d'adhérence (4) et (5) qui reçoivent la colle forte (2).

2. Support selon la revendication 1, **caractérisé par le fait que** les zones de compression ou d'extension (6) et (7) sont réalisées dans la mise en forme de la paroi (8).

3. Support selon l'une des revendications 1 ou 2, **caractérisé par le fait que** les zones de compression ou d'extension (6) et (7) sont également disposées dans la paroi (8) de préférence en étant opposées l'une à l'autre.

4. Support selon l'une des revendications 1 à 3, **caractérisé par le fait que** les zones de compression ou d'extension (6) et (7) sont réalisées sous la forme de zones sortantes ou rentrantes par rapport à la paroi (8).

5. Support selon la revendication 4, **caractérisé par le fait que** les zones sortantes ou rentrantes sont configurées avec des ondulations.

6. Support selon la revendication 5, **caractérisé par le fait que** la forme des ondes est en S.

7. Support selon l'une des revendications 5 ou 6, **caractérisé par le fait que** la paroi (8) du corps possède deux zones (10) et (11) de forme concave qui sont reliées par leurs extrémités respectives avec les zones ondulées.

8. Support selon l'une des revendications 5 à 7, **caractérisé par le fait que** les zones ondulées sont disposées entre des nervures parallèles (12.1, 12.2) ou (13.1, 13.2).

9. Support selon l'une des revendications 7 ou 8, **caractérisé par le fait que** chacune des surfaces d'adhérence (4) ou (5) est formée sur l'extérieur des zones de forme concave (10) et (11).

10. Support selon l'une des revendications 1 à 9, **caractérisé par le fait que** la paroi (8) porte en direction de la surface d'adhérence (4) ou (5) des cliquets (15) et (16) pour la fixation d'un couvercle.
